# EUROPEAN PATENT SPECIFICATION

(11) **EP 0 462 343 B1**
(45) Date of publication and mention of the grant of the patent: **26.06.1996**
(21) Application number: 90311554.1
(22) Date of filing: 22.10.1990
(51) Int. Cl.: B60D 1/14, B62D 49/06

(54) **Vehicle to implement coupling system**
Kupplungsvorrichtung zwischen Fahrzeug und Gerät
Système de couplage entre véhicule et outil

(30) Priority: 20.10.1989 GB 8923701
(43) Date of publication of application: 27.12.1991
(73) Proprietor: TECHNORTON LIMITED, Ludlow, Shropshire SY7 1XE (GB)
(72) Inventor: Norton, Harry Williams, Ludlow SY8 1LH (GB)
(74) Representative: Russell-Rayner, Albert Patrick

(56) References cited:
- GB-A- 1 236 393
- US-A- 3 694 006
- US-A- 4 047 734

## Description

This invention relates to systems and arrangements for facilitating the coupling of vehicles and implements to provide a combined arrangement in which the implement can be towed, pushed, carried, partially carried or otherwise handled by the vehicle as specified in the preamble of claim 1 and, for example, as disclosed in US-A-4 047 734.

In particular, the present invention is concerned with the coupling of implements to tractors of various types and sizes.

A major area of activity involving the movement of implements by a tractor is in agriculture. A further major area of activity is in forestry.

Whilst it is well known that the tractor is the principal prime mover to be found in the agricultural, forestry, and other similar industries, the tractor finds many more areas of application.

It is well known that there are very many types of implement and variations within types of implement used in agriculture, forestry etc., which for the purposes of their use need to be towed, pushed, dragged, carried or partially carried by a tractor or similar vehicle.

It is also well known that such implements can conveniently be regarded as being either dynamic or passive in their modes of operation.

By the dynamic mode is to be understood that the implement requires external power from a power source, usually the power take off of the associated vehicle i.e., tractor, to cause operation of the implement, the travel of the tractor merely serving to displace or advance the implement in a required direction and at a required speed.

By the passive mode is to be understood implements which utilise the movement of the associated tractor to produce the requisite operational drive for what ever task or operation that the implement is intended to perform.

The nature of the operational function of implements to be operated is very varied and as a result there is, in practice, a very wide variation in the physical characteristics of the implements i.e., in terms of length, width, height, volume, and weight; together with wide variations in relation to the manoeuvrability and the overall handling characteristics of the implements whilst in their working and non-working environments.

In addition to implement variations there are very wide differences in construction of tractors. For example, differences in their relative powers, sizes, weights etc., with some tractors being equivalent, in the sense of motor vehicles to the 'Mini' whilst others can be regarded as 'juggernaughts' as extremes plus a wide spread of physical differences i.e., dimensions between these two extremes.

In addition, to the wide range of overall sizes, etc., of the tractors and implements there needs to be considered a correspondingly wide variation i.e., range of detailed constructionnal features particularly in relation to the actual physical features of connection i.e., hitching arrangements involved in coupling/mounting of the implements to the tractors.

In practice, the vast plethora of differences involved in the inter-relationships between the tractors, implements and intercoupling means has created the highly dangerous possibility for mis-matching to occur between an implement and the vehicle i.e., tractor to which it is to be coupled.

This mis-matching can, and often does, introduce situations which are dangerous both to a user and others, and which thus fall far below acceptable standards for safety.

For example, a user may attempt to couple an implement to a tractor by way of a coupling arrangement which is not specifically intended for the particular tractor/implement combination contemplated by either the manufacturer of the tractor or of the implement. In this connection it is not unknown for a tractor user, for coupling convenience, to carry out local (non-manufacturer approved) modifications to the tractor, the implement or to both to avoid loss of time or to avoid expense.

Whilst such action may in most cases lead to an operationally effective connection, the coupling could introduce an inherent or intrinsic risk of malfunction with highly catastrophic results.

Such a risk condition can arise, for example, if a large sized implement is mis-matched with a tractor of inadeqate size, power, weight etc., having regard to the size and nature of implement to be coupled.

A very real danger is that such a mis-match may well prove operationally satisfactory provided that operational conditions are 'average' or 'easy' so that the combination will operate without breakdown or accident, but which upon the occurance of operational conditions departing from the so-called average or normal conditions, are more than likely to induce enhanced stresses and strains etc., into the coupling between the tractor and implement combination involved whereby the scenario may well be set to create conditions for an accident.

The existance of the above discussed factors have been recogised in United States Patent No 3,694,006 whose specification discloses a hitch combination which includes a hitch constituting part on one vehicle and a coupler constituting part on another vehicle. The object of the hitch combination is to prevent a mismatch of towed and towing vehicles and which will have specific application to preventing the overloading of a trailer hitch and the coupling of a coupler to an undersized hitch ball.

In the combination shown one vehicle includes a first key device which is correlated to a certain charateristice i.e., weight of one vehicle. The other vehicle includes a second key device which is correlated to a certain characteristic of the other vehicle. The key devices of the vehicle have interfering parts which serve to prevent securement of the coupler to the hitch when there is a mismatch of vehicle characteristrics when there is a match of vehicle characteristics the key devices of the vehicles cooperate so as to permit the securement of the coupler to the hitch. A practical problem arising with the arrangement proposed is that te individual hitching parts need to be specifically designed to mate with each other. In practice this not always convenient.

It is an object of the present invention to at least reduce the possibility of such-mismatching and its consequences whilst at the same time avoiding the need to design and produce special fittings for every new vehicle and implement.

According to the present invention there is provided a coupling arrangement for effecting a releasable connection between a vehicle and an implement to be coupled to the vehicle, comprising a mounting/coupling part mounted to or provided on the vehicle, and a mounting/coupling part mounted to or provided on the implement to be coupled to the vehicle, whereby an interface unit is adapted for releasable connection with each of said mounting/coupling parts, in that said interface unit comprises a main body including a first latching means mounted to the main body to be movable between a non-latching position and a latching position at which it is adapted operationally to engage with the vehicle mounting/coupling part to secure the interface unit to the vehicle; characterised by a second latching means mounted to the main body to be movable between a non-latching position and a latching position at which it is adapted operationally to engage with the implement coupling/mounting part to secure the interface unit to the implement, and further characterised by means for interlocking the operational actions of the first and second latching means in such manner as to ensure that the interface unit remains secured to the vehicle mounting/coupling part whilst the implement mounting/coupling part is connected to the interface unit.

In accordance with the concepts of the present invention is the requirement that all implements can only be coupled to a vehicle by way of an interconnection assembly constructed in accordance with the proposals of the present invention; with each such interface assembly being adapted for connection to a predefined range of vehicles which themselves satisfy predetermined criteria to be discussed hereinafter, and being further adapted for connection to a predetermined range of implements which themselves satisfy predetermined criteria.

A further basic one of such criteria is that each vehicle has to couple with an implement by way of two coupling interconnection/interface assemblies with each assembly being adapted for connection only to an associated specified location provided on the vehicle. In practice, these mounting locations are located one to either side of the longitudinal axis of the vehicle.

In the case of a rear connection of implements to the vehicle the region of connection between the interface assemblies and the vehicle is in the vicinity of the rear axle assembly or unit of the vehicle.

In the case of a front mounted implement the mounting locations are such that the implement cannot foul the steerable wheel arrangements of the vehicle.

In accordance with the proposals of the invention the vehicle/implement interconnection/interfac assembly is intended to provide for rapid connection and release of implements relative to the vehicle so that the vehicle user is able to use the vehicle interchangeably with a range of implements.

In putting the concepts of the invention into practice all vehicles i.e., tractors are categorised in terms of defined criteria such as their overall sizes, power, and/or weight into, for example, three groups of vehicles. In each case the grouping of the vehicles involved is such as to keep to a minumum the overall number of connection/interface assembly constructions required.

All implements are similarly categorised in terms of criteria such as, for example, their sizes, weights, operational purpose/function into a corresponding number of groups i.e., three groups, with tee implements of each group utilising vehicle attachment fittings adapted to cooperate with a particular one or ones of the connection assemblies.

In addition, the connection/interface assemblies themselves will likewise be categorised into distinct units each capable of affording interconnection compatability with a particular range or group of vehicles and with a particular range of implements and at the same time preventing connection with any implement/vehicle not falling within the categorised compatability ranges.

In general, any connection assembly involved with the concepts of the invention can conveniently be regarded as involving three main sections, a first section which relates to the releasable connection of the assembly to the vehicle; a second section which relates to the releasable connection of the assembly to the implement; and the third section which relates to the locking/releasing of the assembly with respect to the vehicle and implement.

The first section provides for a releasable connection to the vehicle and includes a mounting/coupling means i.e., bracket, plate, element or the like permanently mounted to the vehicle. In the case of a rear mountable implement for a tractor the mounting/coupling bracket, plate etc., is securely connected to the underside of the rear axle structure. The dimensions, shape and overall size of these mounting/coupling brackets, plates etc., are such as to provide for a very limited range of bracket, plate etc., sizes.

In addition, the features provided for enabling the releasable connection of the remainder of the first section to the bracket, plate etc., are uniform for all sizes of connection/interface assembly whereby the associated complementary features provided upon the associatable mounting/connection brackets, plates etc., are likewise uniform.

Each mounting/connection bracket, plate etc., size is designed to be attachable to a vehicle of a particular size and power tractor and to vehicles of a smaller power but not to a larger vehicle. As has been indicated the number of sizes for the mounting/connection brackets, plates etc., is controlled by being kept as few as possible for instance three sizes only, conveniently called large, medium and small.

In conjunction with this control of mounting/connection bracket, plate etc., size the first section of the connection/interface assembly is thus intended to cooperate with a particular maximum vehicle size and can only couple with the mounting/connection bracket, plate etc., associated with that maximum vehicle size or with the mounting/connection bracket, plate etc., of a smaller sized vehicle.

The connection elements provided upon implements are of such construction that they can releasably couple with one of the connection/interface assemblies constructed in accordance with the proposals of the invention.

The second sections are such that a connection/interface assembly that is intended to couple with an implement of a particular size can only can only be engaged by an implement of that size or by a physically smaller size and not with an implement of a larger size.

It will be understood that by means of these size, etc., criteria the implements, vehicles and connection/interface assemblies are effectively categorised with respect to each other.

Thus we have the situation that:-
a first i.e., large model, assembly can be coupled to the largest vehicle anticipated and in general at least to the large sized implements allowable by the overall system, and possibly to medium and small sized implements;
a second, i.e., medium model, assembly can be intended for connection to a medium size vehicle and perhaps a small vehicle but not to a barge sized vehicle, and to medium and small sizes of implements and no others; whilst
a third i.e., small model, assembly can be connected only to a small size of vehicle and to a small size of implement and cannot be connected either to neither medium and large vehicles and implements.

It will be apparent that with the above discussed vehicle/implement connection/interface system it is possible for largest sized implements to be operationally connected to the largest size of vehicle and not to any vehicle not satisfying the predetemined criteria defining the largest vehicle (that is most powerful etc.,)

Smaller sizes of implements can be coupled to the other than the smallest size of vehicle.

Also implements of the medium sized category can only be coupled to vehicles of the medium size category and larger and not to smaller vehicles

It is to be understood that the particular construction of the connection/interface assemblies will be related to the nature of the 'hitch' between the tractor and implement and in particular as to whether the hitch is a two point (whether high or low) or a four point hitch. These two basic types of hitch will be essentially provided by the structure of the second sections of the connection/interface assemblies since the first sections will still be required to satisfy the categorising criteria mentioned above.

Similarly whatever the particular constructional form of the connection/interface assembly second sections their operational connection inter-relationship with the implements themselves will still have to accord with the above discussed categorising criteria.

For a better understanding of the invention and how to carry the same into effect reference will now be made to the accompanying drawings in which:-
Figure 1 is a sectional side view of an embodiment of a connection/interface assembly, the Figure showing in full lines a first operationat relationship of the components thereof and in dashed lines a second operational relationship of the components;, the Figure illustrating the assembly when attached to a vehicle;
Figure 2 is an end view of the assembly of Figure 1; and
Figure 3 is a view from below of the assembly of Figure 1.
Figure 4 illustrates very schematically use of the connection assembly of Figures 1 to 3 with a so-called low fitting two point hitch or coupling between an implement and a tractor;
Figure 5 illustrates very schematically use of the connection assembly of Figures 1 to 3 with a so-called high fitting two point hitch or coupling between an implement and a tractor; and
Figure 6 illustrates very schematically use of the connection assembly of Figures 1 to 3 and in use with a so-called four point hitch or coupling between an implement and a tractor.

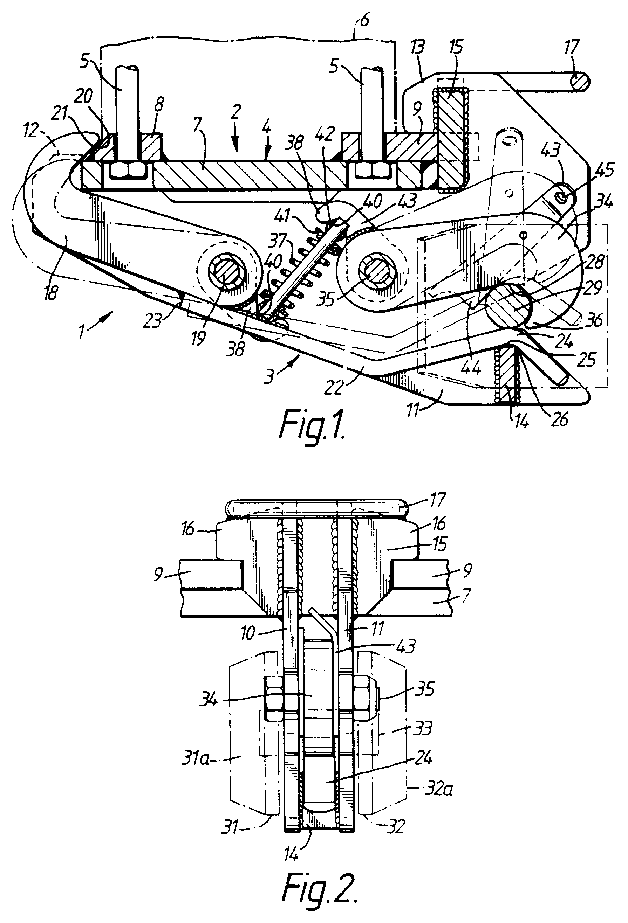

Referring now to Figures 1 to 3, a connection/interface assembly 1 shown therein may conveniently be considered as including two major sections a first major section 2 which is intended to be permanently secured to an appropriate location on a vehicle, and a second major section 3 that is intended to be releasably connectable to both the first section and to an implement.

In practice, there are two such assemblies 1 involved in coupling an implement to the tractor. The assemblies are located one to each side of the longitudinal axis of the tractor 1. For convenience the following discussion will be concerned with the connection of implements to the rear of a teactor.

The section 2 providing the permanent fixture comprises a mounting/connection bracket, plate, etc., unit 4 which is secured permanently by bolts or the like 5 to the underside of the rear axle assembly 6 of the tractor 1. In the Figure this axle assembly 6 is only very schematically indicated.

The unit 4 comprises a main plate 7. First and second bars 8 and 9 are permanently attached to the plate 7 by welding.

The bars 8 and 9 can conveniently be regarded as providing a leading latching bar and a trailing latching bar. A recess (not seen in the Figures 1 to 3) is formed in the forwardly and rearwardly facing edges of the two bars 8 and 9 respectively. The recesses are in-line one with the other and are intended to provide latching locations, the functions of which will be discussed hereinafter.

The second major section 3 comprises two side plates 10 and 11 which, as will be discussed hereinafter, are secured together in spaced apart relationship with respect to each other.

Each plate is shaped to provide at one end a first upstanding latch location part 12 and at the other end a second upstanding hook like latch part 13.

The side plates 10 and 11 are maintained in spaced apart relation ship by a first spacer member 14 which is welded in place. The hook like latch parts 13 of the two plates are bridged by a bridging part 15 which projects outwardly of the side plates 10 and 11 and is welded to both side plates. The part 15 is shaped so as to be able to engage in and locate in the recess in the bar 9 and also to provide wing-like projections 16 which are flush with the underside surfaces of the hook like parts 13 of the plates so that the projections able to engage with the upper surface of the bar to the sides of the recess therein. It will be appreciated that the recesses effectively locate the first and second sections relative to each other.

A U-shaped bracket 17 is welded to the upper surfaces of the wing like projections 16, the bracket 17 serving as a means for facilitating the handling of the connection/interface assembly second major section.

A front bar latching element 18 is pivotally mounted between the side plates 10 and 11 on a pivot formed by a bolt 19. The locking of the bolt 19 in place additionally serves to prevent the plates 10 and 11 from outward spread.

The free end of the element 18 is provided with a latching surface 20 intended to engage with a rearwardly inclined complementary surface 21 provided upon the bar 8.

A lever arm 22 is welded or otherwise secured at one end 23 thereof to the pivoted latch element 18. The other end 24 of the lever arm 22 is co-operable with the upper surface 25 of the spacer member 14, the lever being shaped to provide a downwardly facing Vee region 26 in the vicinity of the spacer member 14.

Each side plate 10.11 has at the end thereof in the vicinity of the upstanding part 12 a portion cut-away to provide a guide path 27 leading to a part circular engagement location 28 for an implement hitch or connection pin 29 forming part of the implement hitching arrangements.

The Figure ilustrates the formation of those parts of an immplement hitching arrangement that are specifically operationally cooperable with the connection/interface assembly of the present invention.

As shown the hitching arrangement includes a hitching pin or rod 30 mounted between two plates 31,32 that are spaced apart by a distance enabling the plates to pass one to either side of the side plates 10 and 11. The leading ends 31A, 32A of the plates 32,32 diverge outwardly to facilitate operational engagement. The forward ends are braced by a spacer member 33 which bridges the two plates and which is welded thereto.

A second latching element 34 of the apparatus of the invention is pivotally mounted between the side plates 10 and 11 upon a pivot formed by a further bolt 35 bridging the side plates 10 and 11.

The latching element 34 has at its free end 36 a rearwardly and downwardly facing region especially shaped as to be able to engage with and at least partially straddle the upper and rear regions of the implement hitching pin or rod 29 in such manner when it is so engaged it effectively completes the circular form of the part circular formation 28 above mentioned.

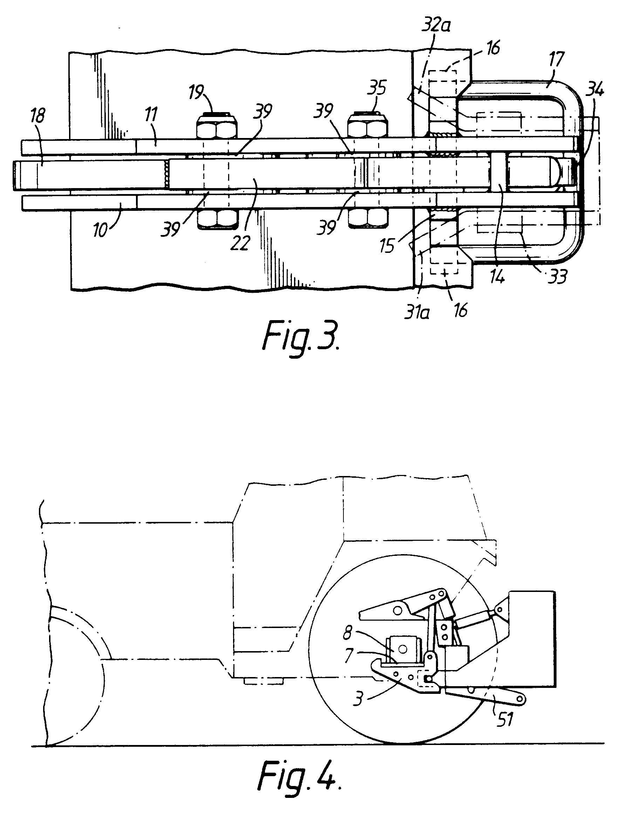

The two latching elements 18,34 are resiliently loaded in a clockwise direction as seen in the Figure 4. This resilient loading is effected by a compression spring 37 compressed between two force transmitting members 38 respectively connected to move with the latch members.

Each such member 38 includes a yoke part 39 which is engaged with its associated latching member to be pivotable therewith. Each such member provides a cup-like part 40 for receiving the end region 41 of a compression spring support and alignment guide 42.

It will be seen that the resilient loading of any one pivoted latch member acts against the other pivoted element in the opposite sense so that any attempt to move one element in any particular direction increases pressure upon the other element in the opposite direction.

A lever 43 is pivotally mounted to the latching element 34, one end 44 of this lever being arranged lockingly to engage with the element hitch pin or rod 29 and the other end 45 is adapted for connection to a pull cord of the like (not shown) whereby upward pull on the pull cord will lift the latch element 34 away from the latching setting of the hitching pin or rod 29.

The above discussed apparatus is used as follows:-

In the first place the plate 7 is secured permanently to the tractor axle 8. The bolts 5 used will be in accordance with the requirements of safety regulations etc.

The latch part 13 and the associated projections 16 are engaged with the bar 9 of the plate 7. Then by means of the lever 22 the latching element 18 is pivoted such that the latching surface 20 thereof cooperates with the complementary latching surface 21 on the bar 8. At this point the Vee 26 of the lever 22 will have nested onto the top surface 25 spacer 14 bridging the side plates 10 and 11.

The relative dimensions of the plate 7, the bars 8 and 9. the latch parts 13, and the latching element 18 are such that with the lever abutting the spacer top surface 25 the assembly second section 3 is firmly secured to the plate.

In practice, these various dimensions serve to ensure that only a correct second major section can be attached to the plate 7. An incorrect second major section cannot be clamped in place.

To engage the implement to the interface assembly 1 the pin or rod 29 is engaged in the part circular location 28 in the plates 10 and 11. The engaging push of the pin 29 against the front of the latching element 36 causes the latter to pivot anti-clockwise against its resilient loading thereby eventually to displace the element 36 sufficiently anticlockwise to allow the pin 29 to enter the location notch 28. As soon as this point is reached the resilient loading on the latching element will pivot it clockwise thereby effectively to lock the pin 29 in position.

Generally speaking, the end of the implement that engages with the connection assembly of the invention is unsupported so that the full weight of the forward end of the implement bears upon the location 28 thereby ensuring that the rod or pin 29 fits firmly into position.

In practice, the relative dimensions of the rod or pins 29 and the recessed locations 28 are such that the rod or pin 29 of a 'large' size implement will not engage with the recess location 28 of a small or medium interface assembly. Similar cosiderations apply to the various other above mentioned categorising possibilities.

It will be understood that throughout this operation the consequential resilient loading produced upon the latching element 18 through the arrangement of the spring 37 and its guide and support arrangements will act as to exert greater retention forces on the mounting of the section 2 to the plate 7. Also the resilient loading effected by the spring 37 is such as to maintain the latching effect by the latching element 36.

It will also be noted that the pin 29 of the implement rests upon the lever 22 thereby preventing any pivoting thereof in the direction required to release the latching element 18 from engagement with the bar 8.

In the Figure 1 the full line representations of the latching elements 18, and 34 and the lever 22 represent the locked-on settings of the assembly whereas the dashed lines indicate the release position.

It will be appreciated that the combination of the resilient loading of the latching elements and the inter-relationship between the lever 22 and the rod or pin 29 provides an interlocking system which ensures that the assembly 1 cannot be released when an implement is fitted.

To release an implement it is only necessary to lift the lever 43 upwards and in so doing pull the latching element upwardly away from the engaged position with the rod or pin 29. which can then be moved rearwardly with a combined lifting and rearward pull to remove the rod or pin from the assembly section 3.

It will be appreciated that the relative dimensions of the plates and associated sections 3 ensure that only sections of a predetermined size etc., can fit with a mounting plate 7. Also the dimensions of the mounting plate 7 determine whether or not the plate can be mounted to any particular tractor.

It should also be noted that whilst rhe particular mounting assembly described has been discussed in connection with end entry of am implement the concepts of the invention can be used with a top entry, bottom entry and or side entry configuration.

Reference will now be made to Figures 4 to 6 which very schematically illustrate the use of connection assemblies incorporating the features of the invention with several of the well known standard forms of hitching an implement to a tractor rear end.

These known forms of linkage will incoporate various members associated with the coupling of the implement to the tractor, the control of the implement etc., which do not form part of the proposals of the invention and thus are not specifically described.

Even though such additional elements may be present the key coupling arrangement for coupling the implement to the tractor is the connection/interface assembly 1 having a construction that is based upon the concepts of the invention. In each case a plate 7 is permanently attached to the underside of the tractor rear axle unit 8, the size of the plate 7 being related to the category chosen for the tractor. Also in each case a connection/intrface assembly 1 of the invention is used and involves the coupling of a primary hitching rod or pin in the manner previously described.

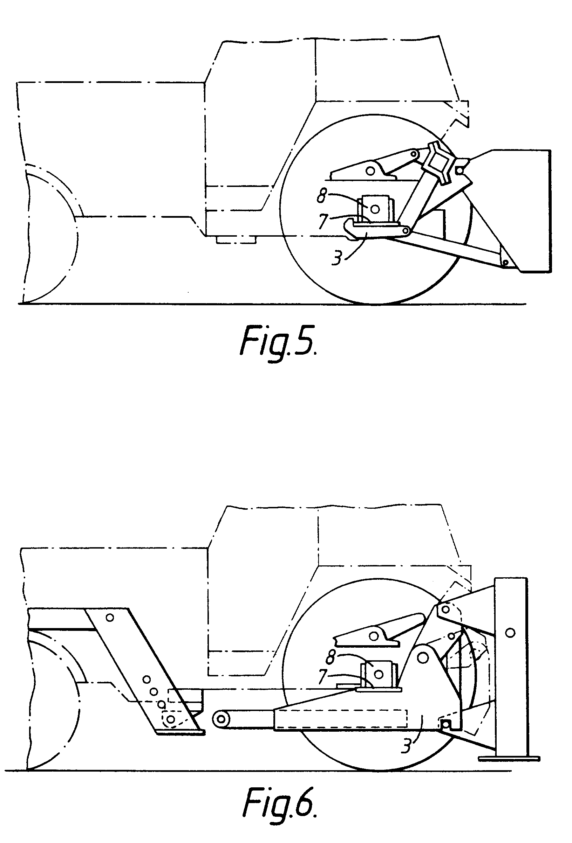

The hitch arrangement shown in figure 5 is a so-called high two point hitch.

The arrangement shown in Figure 6 is a highly schematic representation of a four point hitch in which the implement couples with the tractor are four positions roughly lying at the corners of a rectangle.

Although the overall construction is more complicated than those briefly mentioned in relation to Figure 4 and 5, the essential and primary intercoupling between the implement and the tractor is by way of an intercoupling assembly based upon the concepts of the invention. That is to say a mounting plate in accordance with the concepts of the invention is permanently connected to the underside of the rear axle of the tractor 1. As before the coupling assembly is adapted for releasable connection with this plate.

## Claims

1. A coupling arrangement for effecting a releasable connection between a vehicle and an implement to be coupled to the vehicle, comprising a mounting/coupling part (2) mounted to or provided on the vehicle, a mounting/coupling part (29) mounted to or provided on the implement to be coupled to the vehicle, whereby an interface unit (1) is adapted for releasable connection with each of said mounting/coupling parts (2,29), and whereby said interface unit (1) comprises a main body (10,11) including a first latching means (13,18) mounted to the main body (10,11) to be movable between a non-latching position and a latching position at which it is adapted operationally to engage with the vehicle mounting/coupling part (2) to secure the interface unit (1) to the vehicle; characterised by a second latching means (34) mounted to the main body (10,11) to be movable between a non-latching position and a latching position at which it is adapted operationally to engage with the implement coupling/mounting part (29) to secure the interface unit (1) to the implement, and further characterised by means (22,37) for interlocking the operational actions of the first and second latching means (18,34) in such manner as to ensure that the interface unit (1) remains secured to the vehicle mounting/coupling part (2) whilst the implement mounting/coupling part (29) is connected to the interface unit (1).

2. A coupling arrangement as claimed in claim 1, and characterised by the first latching means (13,18) including a first element (18) pivotally mounted to the body part (10,11) and providing a hook-like latching end (20) for operationally engaging with the vehicle mounting/coupling part (2,21), and in that the interlocking arrangement (22,37) includes a first lever (22) arm secured at one end to the first latching element (18), the first lever arm (22) being such that when the implement mounting/coupling part (29) is coupled to the interface unit the interlocking means (22,37) is arranged to lock the first latching element (18) against movement in such sense as would allow the interface unit (1) to disengage from the vehicle mounting/coupling part (29).

3. A coupling arrangement as claimed in claim 1 or 2, and characterised in that the second latching means includes a second element (34) pivotally mounted to the body part (10,11) and providing a hook-like latching end (36) for operationally engaging with the implement mounting/coupling part (29), and in that the interlocking arrangement (22,37) includes a second lever arm (43) secured at one end to the second latching element (34), the second lever arm (43) being such that when an implement mounting/coupling part (29) is coupled to the interface unit, the coupling action between the implement and the interface unit (1) locks the second lever arm (43) against movement in such sense as would allow the interface unit (1) to disengage from the implement.

4. A coupling arrangement as claimed in claim 3, and characterised by means (37) for resiliently loading the first and second latching elements (18,34) in such manner that the resilient loading exerted tends always to urge the first and second latching elements (18,34) in the sense that moves the associated latching means towards their latching positions.

5. A coupling arrangement as claimed in any preceding claim, and charaterised by means for selectively enabling the implement latching means (1) to be disengaged from its latching position in such manner as to overcome the action of the interlocking arrangement (22,37) when it is required to separate the implement from the interface unit.

6. A coupling arrangement as claimed in any preceding claim, and characterised in that the second latching means (34) is arranged to be automatically displaced to the position in which it is able to engage with the implement during the engagement of the implement with the interface unit (1).

## Patentansprüche

1. Kupplungsvorrichtung zur Herstellung einer lösbaren Verbindung zwischen einem Fahrzeug und einem daran ankuppelbaren Gerät, mit einer am Fahrzeug befestigbaren oder befestigten Ankupplungsplatte (2) und einem Ankupplungsteil (29), der sich am ankuppelbaren Gerät befindet oder daran angebracht ist, wobei ein Schnittstellen-Kupplungs-Element (1) mit jedem der beiden Ankupplungsteile (2,29) eine lösbare Verbindung herstellt und wobei das Schnittstellen-Kupplungs-Element (1) einen Hauptrahmen (10,11) umfasst mit darin angeordneten ersten Kupplungsorgangen (13,18), welche zwischen einer Freigabestellung und einer Einklinklage bewegbar sind, wobei sie in der Einklinklage das Schnittstellen-Element (1) mit der am Fahrzeug befestigten Ankupplungsplatte (2) vebinden, gekennzeichnet durch ein zweites Kupplungsorgan (34), welches im Hauptrahmen (10,11) angebracht ist und zwischen einer Freigabestellung und einer Einklinklage bewegbar ist, wobei es in der Einklinklage den Ankupplungsteil (29) des ankuppelbaren Geräts fasst und mit dem Schnittstellen-Kupplungs-Element (1) verbindet, ferner gekennzeichnet durch Organe (22, 37), welche die ersten und zweiten Kupplungs-Elemente (18,34) gegeneinander verriegeln, derart, dass das Schnittstellen-Element (1) an der Ankupplungsplatte (2) gehalten bleibt, während das Ankupplungsteil (29) mit dem Schnittstellen-Element (1) verbunden wird.

2. Kupplungsvorrichtung nach Anspruch 1, dadurch gekennzeichnet, dass die ersten Kupplungsorgane (13,18) ein erstes Kupplungs-Element (18) umfassen, welches schwenkbar im Hauptrahmen (10,11) gelagert ist und ein hakenförmiges Ende (20) aufweist, welches beim Betrieb die am Fahrzeug angebrachte Ankupplungsplatte (2,21) fasst, und dass die Verriegelungsorgane (22,37) einen ersten Hebel (22) umfassen, welcher mit einem Ende des ersten Kupplungselmentes (18) verbunden ist, derart, dass beim Ankuppeln des Ankuppelteils (29) des Gerätes an das Schnittstellen-Kupplungs-Element (1) die Verriegelungs-Organe (22,37) das erste Kupplungs-Element (18) bezüglich Bewegungen arretieren, die ein Lösen des Schnittstellen-Kupplungs-Elementes (1) vom Anluppelteil (29) erlauben würden.

3. Kupplungsvorrichtung nach Anspruch 1 oder 2, dadurch gekennzeichnet, dass die Kupplungsorgane ein zweites Kupplungs-Element (34) umfassen, welches schwenkbar im Rahmen (10,11) gelagert ist und ein hakenförmiges Ende (36) aufweist, welches beim Betrieb den Ankupplungsteil (29) des Gerätes fasst, und dass die Verriegelungsorgane (22,37) einen zweiten Hebel (43) umfassen, welcher mit einem Ende des zweiten Kupplungs-Elementes (34) verbunden ist, wobei der zweite Hebel (43) dafür sorgt, dass das Ankuppeln des Schnittstellen-Kupplungs-Elementes (1) an den Ankuppeltell (29) des Gerätes den zweiten Hebel (43) bezüglich Bewegungen arretiert, die ein Lösen des Schnittstellen-Kupplungs-Elementes vom ankuppelbaren Geräte erlauben würden.

4. Kupplungsvorrichtung nach Anspruch 3, dadurch gekennzeichnet, dass Verriegelungsmittel (37) angebracht sind, welche die ersten und zweiten Kupplungs-Elemente (18,34) derart federnd belasten, dass sie die Kupplungs-Elemente (18,34) in ihre jeweilige Kupplungslage drängen.

5. Kupplungsvorrichtung nach einem der vorgehenden Ansprüche, gekennzeichnet durch Mittel, welche erlauben, die Kuppelorgane des Schnittstellen-Kupplungs-Elementes (1) wahlweise zu lösen, wobei die Wirkung der Verriegelungsorgane (22,37) aufgehoben wird, wenn das Gerät vom Schnittstellen-Element (1) getrennt werden soll.

6. Kupplungsvorrichtung nach einem der vorgehenden Ansprüche, dadurch gekennzeichnet, dass das zweite Kupplungs-Element (34) so ausgebildet ist, dass es im Stande ist, beim Ankuppeln des Schnittstellen-Kupplungs-Elementes (1) an das Gerät dessen Ankupplungsteil automatisch zu fassen.

## Revendications

1. Dispositif de couplage pour effectuer une liaison amovible entre un véhicule et un outillage devant être couplé au véhicule, comprenant une partie de montage/couplage (2) montée ou prévue sur le véhicule, une partie de montage/couplage (29) montée ou prévue sur l'outillage devant être couplé au véhicule, dispositif dans lequel une unité d'interface (1) est adaptée pour une liaison amovible avec chacune desdites parties de montage/couplage (2,29), et dans lequel ladite unité d'interface (1) comprend un corps principal (10,11) incluant un premier moyen de verrouillage (13,18) monté sur le corps principal (10,11) de façon à être mobile entre une position de déverrouillage et une position de verrouillage dans laquelle il est adapté pour s'engager de façon fonctionnelle avec la partie de montage/couplage (2) du véhicule, pour fixer l'unité d'interface (1) au véhicule ; caractérisé par un second moyen de verrouillage (34) monté sur le corps principal (10,11) de façon à être mobile entre une position de déverrouillage et une position de verrouillage dans laquelle il est adapté pour s'engager de façon fonctionnelle avec la partie de montage/couplage (29) de l'outillage, pour fixer l'unité d'interface (1) à l'outillage, et caractérisé en outre par des moyens (22,37) pour bloquer mutuellement les actions fonctionnelles des premier et second moyens de verrouillage (18,34), de façon à assurer que l'unité d'interface (1) reste fixée à la partie de montage/couplage (2) de véhicule tandis que la partie de montage/couplage (29) de l'outillage est liée à l'unité d'interface (1).

2. Dispositif de couplage tel que revendiqué dans la revendication 1, et caractérisé en ce que le premier moyen de verrouillage (13,18) inclut un premier élément (18) monté de façon pivotante sur la partie de corps (10,11) et fournissant une extrémité de verrouillage en forme de crochet (20) pour s'engager de façon fonctionnelle avec la partie de montage/couplage (2,21) du véhicule, et en ce que le dispositif de blocage mutuel (22,37) comprend un premier bras de levier (22) fixé à une extrémité au premier élément de verrouillage (18), le premier bras de levier (22) étant tel que lorsque la partie de montage/couplage (29) de l'outillage est couplée à l'unité d'interface, les moyens de blocage mutuel (22,37) sont arrangés pour empêcher le mouvement du premier élément de verrouillage (18) dans un sens qui permettrait à l'unité d'interface (1) de se désengager de la partie de montage/couplage (29) du véhicule.

3. Dispositif de couplage tel que revendiqué dans la revendication 1 ou 2, et caractérisé en ce que le second moyen de verrouillage inclut un second élément (34) monté de façon pivotante sur la partie de corps (10,11) et fournissant une extrémité de verrouillage en forme de crochet (36) pour s'engager de façon fonctionnelle avec la partie de montage/couplage (29) de l'outillage, et en ce que le dispositif de blocage mutuel (22,37) inclut un second bras de levier (43) fixé à une extrémité au second élément de verrouillage (34), le second bras de levier (43) étant tel que lorsque une partie de montage/couplage (29) de l'outillage est couplée à l'unité d'interface, l'action de couplage entre l'outillage et l'unité d'interface (1) empêche le mouvement du second bras de levier (43) dans un sens qui permettrait à l'unité d'interface (1) de se désengager de l'outillage.

4. Dispositif de couplage tel que revendiqué dans la revendication 3, et caractérisé par des moyens (37) pour bander par ressort les premier et second éléments de verrouillage (18,34) de façon telle que le bandage par ressort exercé ait toujours tendance à pousser les premier et second éléments de verrouillage (18,34) dans le sens qui déplace les moyens de verrouillage associés vers leurs positions de verrouillage.

5. Dispositif de couplage tel que revendiqué dans l'une quelconque des revendications précédentes, et caractérisé par des moyens permettant de désengager sélectivement le moyen de verrouillage de l'outillage (1), de sa position de verrouillage, de façon à surmonter l'action du dispositif de blocage mutuel (22,37) lorsqu'il est nécessaire de séparer l'outillage de l'unité d'interface.

6. Dispositif de couplage tel que revendiqué dans l'une quelconque des revendications précédentes, et caractérisé en ce que le second moyen de verrouillage (34) est arrangé pour être automatiquement déplacé dans la position dans laquelle il est capable de s'engager avec l'outillage, durant l'engagement de l'outillage avec l'unité d'interface (1).
